# EUROPÄISCHE PATENTANMELDUNG

(11) **EP 4 753 142 A1**
(43) Veröffentlichungstag der Anmeldung: **03.06.2026**
(21) Anmeldenummer: 25219186.1
(22) Anmeldetag: 27.11.2025
(51) Int. Cl.: H02S 20/21, H02S 20/22

(54) **BEFESTIGUNGSVORRICHTUNG FÜR PV- / SOLAR-MODULE MIT LATERALEM ANSCHLUSS**

(30) Priorität: 28.11.2024 DE 102024135310
(71) Anmelder: Joh. Sprinz GmbH & Co. KG, 88287 Grünkraut (DE)
(72) Erfinder: Kolleth, Robert, 88376 Königseggwald (DE)
(74) Vertreter: RavensPAT Patentanwälte Partnerschaft mbB

(57) **Zusammenfassung**

Vorgeschlagen wird eine Befestigungsvorrichtung (1) für Photovoltaik- / Solarmodule (2) mit einseitiger lateraler elektrischer Anschlussvorrichtung (3) an einer Einfriedung (21) oder an einer Fassade, umfassend ein unteres Trägerprofil (4) zur haltenden Aufnahme des Moduls (2) und ein oberes Trägerprofil (6) zur Halterung und kippsicheren Befestigung, wobei das untere Trägerprofil (4) einen U-förmigen Querschnitt aufweist, dessen Öffnung in Richtung des oberen Trägerprofils (6) zeigt. Zur vereinfachten Montage ist das obere Trägerprofil (6) dazu ausgebildet, die Anschlussvorrichtung (3) des Moduls (2) zu umschließen, wobei das obere Trägerprofil (6) einen Kabelkanal (20) umfasst, um die elektrische Kontaktierung der Anschlussvorrichtung (3) herzustellen und wenigstens eine elektrische Leitung (19) zur Anschlussvorrichtung (3) zu führen.

## Beschreibung

Die Erfindung steht im Zusammenhang mit dem Bau von Einfriedungen, insbesondere einer Brüstung oder einem Sichtschutz, oder im Zusammenhang mit der Gestaltung von Fassaden und betrifft ein Photovoltaik- und/oder Solarmodul mit einseitiger lateraler elektrischer Anschlussvorrichtung, eine Befestigungsvorrichtung hierfür nach dem Oberbegriff des Anspruchs 2, eine Einfriedung oder Fassade nach dem Oberbegriff des Anspruchs 12 sowie ein entsprechendes Montageverfahren nach dem Oberbegriff des Anspruchs 14.

Aus dem Stand der Technik ist zum Beispiel aus der EP 4 071 317 A1 ein Bausatz zur Bildung eines Geländers mit Solarpanels bekannt. Während oftmals nach dem Stand der Technik Solarpanels an einem Geländer seitlich eingefasst und gehalten werden, werden bei diesem Bausatz Haltemittel für den oberen und unteren Randbereich bereitgestellt, wobei mit dem Haltemittel im unteren Randbereich eine Anschlussdose auf der Rückseite des Solarpanels umschlossen wird. Ferner werden herkömmlicherweise die am Solarpanel anzuschließenden Kabel durch die Seitenpfosten des Geländers geführt.

Aufgabe der Erfindung ist es, eine Befestigungsvorrichtung für Photovoltaik- und/oder Solarmodule im Zusammenhang mit einer Einfriedung, insbesondere einer Brüstung oder einem Sichtschutz, oder im Zusammenhang mit einer Fassade vorzuschlagen, die eine möglichst einfache Montage ermöglicht.

Die Aufgabe wird, ausgehend von einer Befestigungsvorrichtung der eingangs genannten Art, durch die kennzeichnenden Merkmale der Ansprüche 1, 13 und 15 gelöst.

Durch die in den abhängigen Ansprüchen genannten Maßnahmen sind vorteilhafte Ausführungen und Weiterbildungen der Erfindung möglich.

Im Sinne der Erfindung wird zunächst ein Photovoltaik-Modul bzw. ein Solarmodul vorgeschlagen, welches eine einseitige laterale Anschlussvorrichtung für den elektrischen Anschluss aufweist. Der laterale Anschluss ermöglicht es, entsprechend seitlich in ein Halte- bzw. Trägerprofil eingebettet zu werden, wobei das Halte- bzw. Trägerprofil platzsparender ausgebildet sein kann als bei einem herkömmlichen Modul mit dem Anschluss auf der Rückseite. Hier ist entweder der entsprechende, mit dem Anschluss verbundene Anschlussstecker auf der Rückseite sichtbar, oder es muss eine besonders große Abdeckung, Blende oder ein sehr großes Haltemittel verwendet werden, das die Stelle überdeckt. Gemäß der Erfindung besteht grundsätzlich jedoch eine freie Sicht auf die gesamte Modulrückseite. Aus technischer Sicht besitzt die erfindungsgemäße laterale Anschluss-Anordnung noch weitere Vorteile:
- Zum einen kann ein lateraler Anschluss auch besser vor Witterungseinflüssen geschützt werden.
- Zum anderen kann die Rückseite des Moduls möglichst weitreichend von einer wärmeleitfähigen Schicht oder Abdeckung bedeckt werden, um die Wärme vom Modul während des Betriebs abzuleiten.

Für ein solches Modul mit einseitiger lateraler elektrischer Anschlussvorrichtung ist erfindungsgemäß eine Befestigungsvorrichtung vorgesehen, mit der das Modul als Teil einer Einfriedung oder Fassade verwendet werden kann. Typische Einfriedungen sind Brüstungen, Geländer oder auch Sichtschutzwände, auch im Garten, an Grundstücksgrenzen usw. Seit einiger Zeit erfolgt ein Umdenken hinsichtlich der Energiegewinnung, sodass bereits kleine Flächen dazu genutzt werden, regenerative Energie zu gewinnen und dort PV- oder Solarmodule anzubringen, wie es zum Beispiel bei sog. Balkonkraftwerken der Fall ist. Hier handelt es sich in der Regel um senkrechte Flächen, die genutzt werden sollen und mit PV- oder Solarmodulen versehen werden. Erfindungsgemäß können derartige Module auch als Sichtschutzwände im Garten verwendet werden. Neben Geländern und Brüstungen werden auch an Gebäudefassaden, gerade bei Industriebauten, Module angebracht.

Ein wesentlicher Vorteil besteht darin, dass unterdessen es möglich ist, die Oberfläche von Modulen so zu gestalten, dass diese auf den ersten Blick nicht mehr als PV- oder Solarmodule zu erkennen sind. Ohne Ertragsverlust kann die Oberfläche der Module nunmehr mit einer speziellen Farbe beschichtet werden, sodass die Module eingefärbt bzw. mit einem Muster versehen werden können. Ein solcher Farbauftrag kann mit einem speziellen Siebdruckverfahren umgesetzt werden. Damit wird vorteilhafterweise die Hürde abgebaut, aus Design-Gründen auf PV- bzw. Solarmodule zu verzichten, weil die Module in ihrem Aussehen nicht zur übrigen Fassade oder zur sonstigen Umgebung passen.

Die erfindungsgemäße Befestigungsvorrichtung zeichnet sich dadurch aus, dass sie für Photovoltaik- und/oder Solarmodule mit einseitiger lateraler elektrischer Anschlussvorrichtung vorgesehen ist. Zudem verzichtet sie auf seitliche Halterungen, um die Abschattung der Module je nach Sonnenstand möglichst gering zu halten, sondern verwendet ein oberes und unteres Trägerprofil zur Halterung des Moduls.

Das Modul selbst wird gemäß der Erfindung so an der Befestigungsvorrichtung angebracht, dass der einseitig vorhandene, laterale elektrische Anschluss die obere Kante bildet. Diese Anordnung besitzt gleich mehrere technische Vorteile:
- Aus Montagegründen ist es einfacher und sicherer, ein Modul mit lateralem Anschluss auf einer Seite aufzustellen, auf der sich kein elektrischer Anschluss befindet.
- Unterstützt wird dies noch durch ein unteres Trägerprofil, das einen U-förmigen Querschnitt mit der Öffnung nach oben aufweist., sodass das Modul gleich die U-Form eingesetzt werden kann.
- Das untere Trägerprofil kann so ausgebildet sein, dass das Modul nicht umkippt, d.h. es kann entsprechend eng ausgebildet sein bzw. eine Dichtung aufweisen, die das eingesetzte Modul hält. Auf diese Weise kann das Modul zunächst in das untere Trägerprofil eingesetzt werden und steht dabei sicher, sodass die weiteren Montageschritte vorbereitet werden können, ohne dass eine Person das Modul festhalten muss.
- Es bestehen aber auch weitere technische Gründe, die elektrische Anschlussvorrichtung oben anzuordnen. Die elektrische Anschlussvorrichtung kann auf diese Weise einfacher und zuverlässiger vor Witterungseinflüssen, insbesondere vor Wasser bzw. Regen geschützt werden. Denn wenn der elektrische Anschluss sich an einer der vertikalen Kanten oder sogar an der unteren Kante des Moduls befindet, ist es schwieriger, dauerhaft einen Witterungsschutz zu gewährleisten und den Anschluss vor Wasser / Regen abzuschotten, weil das Wasser seitlich herunterlaufen kann, vor allem im unteren Bereich sich aber auch in den Kanten hält und ansammelt. Der gleiche Vorteil ergibt sich gegenüber herkömmlichen Modulen mit Anschlussdose an der Rückseite.

Vertikal angeordnete Montagepfosten dienen gegebenenfalls zur Halterung der Trägerprofile, müssen sonst aber nicht weiter zur Halterung der Module verwendet werden. Die Montagepfosten können auch so ausgebildet sein, z.B. (bzgl. der Ebene der Moduloberflächen) auf gleicher Höhe mit den Modulen liegen, sodass sie wenig oder gar keinen Schatten auf die Module werfen.

Im Übrigen können oberes und unteres Trägerprofil auch direkt an einer Hauswand angebracht sein, sodass auf einer oder auf beiden Seiten ein Montagepfosten entfallen kann. Wird zum Beispiel eine vergleichsweise kurze Einfriedung benötigt, die als Befestigungsvorrichtung zwischen zwei Wänden angeordnet sein soll, so können die Montagepfosten gänzlich entfallen. Denkbar ist auch eine Kombination: Verläuft die Einfriedung über eine größere Länge, so können in regelmäßigen Abständen Montagepfosten angeordnet sein, d.h. der Montagepfosten entfällt an den äußeren Befestigungsvorrichtungen auf jeweils einer Seite, bei den anderen, dazwischen angeordneten Befestigungsvorrichtungen werden diese seitlich von jeweils einem Montagepfosten begrenzt.

Denkbar ist aber auch, dass die vertikalen Verbindungen zwischen oberem und unterem Trägerprofil weggelassen werden, weil die Trägerprofile selbst bereits an der Fassade, z.B. parallel zur Oberfläche einer Wand angebracht und befestigt sind, oder weil die Montagepfosten nicht seitlich der Module, sondern z.B. hinter den Modulen angebracht sind.

Insbesondere müssen auch die vertikalen Pfosten nicht mehr genutzt werden, um aufwendig die Kabel durch die Stangen hindurchzuziehen. Vielmehr kann erfindungsgemäß das obere Trägerprofil als Kabelkanal genutzt werden. Da das obere Trägerprofil in vorteilhafterweise ohnehin die elektrische Anschlussvorrichtung am Modul umschließt, um auch vor Regen zu schützen, können die Kabel zum Modul auch in dem oberen Trägerprofil verlegt werden und sind gleichermaßen geschützt. Insbesondere umschließt das obere Trägerprofil die Anschlussvorrichtung bis zu den beiden Oberflächen des Moduls. Vor allem wird damit auch die Montage deutlich erleichtert. Denkbar ist, dass das obere Trägerprofil den Kabelkanal umfasst.

Das obere Trägerprofil kann je nach Ausführungsform auch als Handlauf (z.B. eines Geländers) dienen. Vor allem bei einer solchen Variante erstreckt sich der Handlauf in der Regel über die gesamte Länge des abzutrennenden Bereichs, sodass ein Kabel vollständig verdeckt bis zum Rand geführt werden kann, wo es möglichst unauffällig z.B. in eine Gebäudewand geführt werden kann.

Bei einer vorteilhaften Weiterbildung der Erfindung weist das obere Trägerprofil einen Gegenhalter und eine oder mehrere Halterungsschiene(n) auf, zwischen denen das Modul gehalten werden kann. In vorteilhafter Weise können die Halterungsschienen als separate Bauteile ausgebildet sein, die an den Gegenhalter bzw. an den restlichen Teil des oberen Trägerprofils lösbar befestigt, insbesondere geschraubt werden können. D.h. das Modul wird z.B. zuerst in das untere, U-förmige Trägerprofil gestellt, dann oben an den Gegenhalter gelehnt; schließlich wird die Halterungsschiene von vorne mit dem Gegenhalter oder dem restlichen oberen Trägerprofil verschraubt, sodass das Modul zwischen Halterungsschiene und Gegenhalter befestigt ist.

Denkbar ist auch, dass die Halterungsschiene fest mit dem oberen Trägerprofil verbunden ist und vom Gegenhalter wegklappbar ist. Dies kann aber die Flexibilität beeinflussen, je nachdem, wo sich an der oberen Modulkante die elektrischen Anschlüsse befinden. Je nach Ausführungsform kann eine Halterungsschiene verwendet werden, oder die Halterungsschienen sind so kurz, dass sie zwischen zwei aufeinanderfolgende elektrische Anschlussvorrichtungen passen und diese nicht überdecken, sodass Kabel mit den Anschlüssen verbunden werden können.

Bei einer bevorzugten Variante wird die Halterungsschiene aus einer Richtung quer zur vom Photovoltaik- und/oder Solarmodul aufgespannten Ebene an dem Photovoltaik- und/oder Solarmodul angebracht. So wird die Halterungsschiene etwa nicht von oben sondern seitlich/ von der Seite kommend am Photovoltaik- und/oder Solarmodul angeordnet und dort befestigt. Beispielsweise kann die Halterungsschiene aus einer Richtung an dem Photovoltaik- und/oder Solarmodul angebracht werden, welche im Wesentlichen senkrecht zu der vom Photovoltaik- und/oder Solarmodul aufgespannten Ebene steht.

Es ist denkbar, dass die Photovoltaik- und/oder Solarmodule nach einer gewissen Zeit getauscht werden müssen, sei es wegen eines technischen Defekts, sei es, weil die Einfriedung oder Fassade hinsichtlich ihres Aussehens geändert werden soll. Dann kann es auch vorkommen, dass sich die Anschlüsse des neuen Ersatzmoduls an einer anderen Stelle befinden. Um eine flexible Anbringung zu ermöglichen, kann am oberen Trägerprofil bzw. am Gegenhalter eine Laufschiene für Nutensteine vorgesehen sein. Die Laufschiene bildet eine Führung für die Nutensteine, die in dieser Führung entlang des oberen Trägerprofils verschoben werden können. Die Nutensteine sind eine besondere Art von Muttern, z.B. in der Form von T-Nut-Muttern, d.h. die Nutensteine laufen in einer T-förmigen Nut und besitzen einen entsprechenden T-förmigen Querschnitt. Der nicht verdeckte Teil besitzt eine Gewindebohrung, in der eine Schraube eingedreht werden kann. Auf diese Weise kann der Nutenstein entlang des oberen Trägerprofils an die Stellen verschoben werden, an denen sich nicht der elektrische Anschluss des Moduls befindet. Dort können das Modul bzw. der Gegenhalter von der Halterungsschiene abgedeckt werden. Danach wird die Halterungsschiene am Nutenstein, der in die passende Position geschoben wurde, befestigt, also festgeschraubt. Auch dann, wenn die Halterungsschiene bereits vorgebohrte Löcher aufweist, durch welche die Befestigungsschrauben gesteckt werden können, können die Nutensteine entsprechend passend verschoben und positioniert werden.

Entsprechend ist die Laufschiene vorteilhafterweise parallel zur oberen Kante des Moduls, wo sich auch die elektrischen Anschlüsse befinden, angeordnet, um je nach Modul flexibel angeordnet werden zu können.

Um die obere Halterung, sowohl aus Designgründen als auch aus Gründen des Witterungs- bzw. Regenschutzes abdecken zu können, kann eine Blende vorgesehen sein, die vor die Halterungsschiene gesetzt wird. Denkbar ist grundsätzlich auch, dass Halterungsschiene und Blende als ein gemeinsames Bauteil ausgebildet sind, um den Montageaufwand geringer zu halten. Aber auch die Abdichtung sollte dann noch gewährleistet sein.

Die Halterungsschiene kann bei einer bevorzugten Ausführungsvariante der Erfindung auch zur Ausbildung des Kabelkanals beitragen. Die Halterungsschiene kann gestuft oder gewinkelt ausgebildet sein, z.B. mit einer Flanke einen Teil der Vorderseite des Moduls überdecken, dann die schmale seitliche Fläche des Moduls nach oben hin überdecken, dann wiederum eine Kante bilden, sodass ein Abschnitt / eine Flanke vor der Laufschiene liegt und zur Befestigung verwendet werden kann. Bei dieser gestuften Ausführung kann beispielsweise unmittelbar oberhalb der Seitenfläche des Moduls Platz für Kabel bzw. den Kabelkanal sein.

Denkbar ist, dass der Kabelkanal von der Halterungsschiene und dem Photovoltaik- und/oder Solarmodul als Hohlraum ausgebildet ist. Beispielsweise kann der Kabelkanal auch zwischen Blende und Halterungsschiene oder zwischen Halterungsschiene, dem oberen Trägerprofil und dem Photovoltaik- und/oder Solarmodul ausgebildet sein.

So kann der Kabelkanal oberhalb des Photovoltaik- und/oder Solarmoduls angeordnet sein, beispielsweise in Verlängerung der vertikalen Ausdehnung des Photovoltaik- und/oder Solarmoduls oder auch in der von dem Photovoltaik- und/oder Solarmodul aufgespannten Ebene vorhanden sein.

Das Modul mit seinen elektrischen Anschlüssen soll vor allem gegen Witterungseinflüsse und Wasser geschützt sein. Bei einem Ausführungsbeispiel der Erfindung können daher am oberen und/oder unteren Trägerprofil Dichtungen vorgesehen sein, mit denen die Profile gegenüber dem Modul abgedichtet werden können. Die Dichtung kann auf die vordere und/oder hintere Oberfläche des Moduls aufsetzen. Ferner dient dieser Aufbau auch der Lagerung des Moduls. Vorzugsweise ist das untere Trägerprofil einteilig ausgebildet. Zumindest kann das untere Trägerprofil so ausgebildet sein, dass das Modul von oben eingesetzt werden kann und durch die Form des unteren Trägerprofils nicht umkippt. Auch die Dichtungen im unteren Trägerprofil können so ausgebildet sein, dass das Modul noch von oben eingebracht werden kann.

Dementsprechend können diese Vorteile, vor allem die einfache und unkomplizierte Montage mit einfacher Verlegung der Kabel und die verringerte Wartungsanfälligkeit gegenüber Witterungseinflüssen genutzt werden, um eine Einfriedung oder eine Fassade zu bauen, welche eine Befestigungsvorrichtung und ein entsprechendes Modul mit einseitigem, lateralem Anschluss verwendet.

Somit ist bei Aufbau, genauso wie beim Nachrüsten eine einfache Montage möglich, bei der ein erfindungsgemäßes Photovoltaik- und/oder Solarmodul sowie eine erfindungsgemäße Befestigungsvorrichtung bereitgestellt werden. Der Benutzer kann das Modul beim Montagehandling gleich in seine Endposition stellen, in dem er das Modul in das untere U-Trägerprofil hineinstellt, sodass die elektrischen Anschlüsse oben liegen, d.h. im Bereich des oberen Trägerprofils. Das Modul wird am oberen Trägerprofil gegen den Gegenhalter gelehnt. Die Nutensteine werden so verschoben, dass diese nicht an den elektrischen Anschlüssen liegen und gegebenenfalls mit den Öffnungen der Halterungsschiene(n) übereinstimmen. Die Halterungsschiene wird angeschraubt. Des Weiteren werden nun die Kabel mit den elektrischen Anschlüssen verbunden. Hierzu können in vorteilhafter Weise die länglichen und somit für den Kabelkanal passenden MC4-Verbinder genutzt werden. Die Halterungsschiene kann einen Teil des Kabelkanals ausbilden.

Zuletzt können Kabelkanal und Halterungsschiene von einer Blende verdeckt werden, um das Profil dicht abzuschließen und zum Beispiel als Handlauf einsatzbereit zu machen.

Oberes bzw. unteres Trägerprofil können zu Beginn der Montage bereits, je nach Ausführungsform bzw. Position der Einfriedung, zwischen Montagepfosten bzw. zwischen Wänden bzw. zwischen einer Wand und einem Montagepfosten angebracht werden. Sie bilden sodann ein stabiles Grundgerüst zur Lagerung der Module, die dann in die Trägerprofil-Konstruktion eingesetzt werden können.

### Ausführungsbeispiel:

Ein Ausführungsbeispiel der Erfindung ist in den Zeichnungen dargestellt und wird nachstehend unter Angabe weiterer Einzelheiten und Vorteile näher erläutert. Im Einzelnen zeigen:
- Fig. 1:: eine schematische Darstellung der Befestigung eines Solarmoduls mit Hilfe des oberen und unteren Trägerprofils bei einer Befestigungsvorrichtung gem. der Erfindung,
- Fig. 2:: eine schematische Darstellung der Ausbildung eines Kabelkanals Trägerprofils bei einer Befestigungsvorrichtung gem. der Erfindung,
- Fig. 3:: eine Brüstung gem. der Erfindung, sowie
- Fig. 4:: ein Schema des Montageverfahrens gem. der Erfindung.

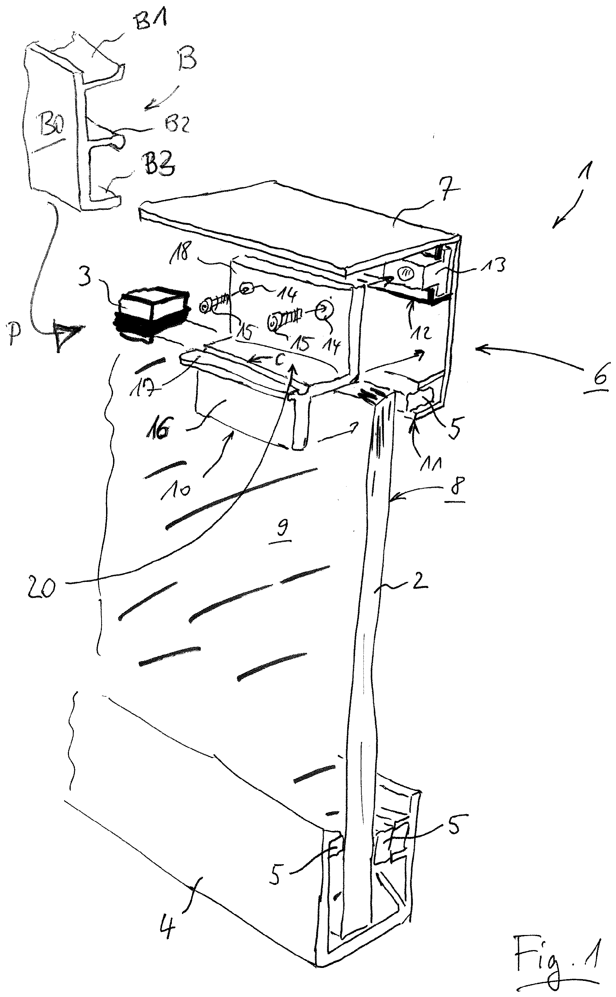

Figur 1 zeigt einen Teil einer Befestigungsvorrichtung 1 gem. der Erfindung mit einem Solarmodul 2 mit einer einseitig lateral angebrachten Anschlussvorrichtung 3. Das Modul 2 ist in das untere Trägerprofil 4 mit U-förmigem Querschnitt eingesetzt. Das U-förmige Abschnitt ist an den Schenkeln jeweils durch Dichtungen 5 abgedichtet. Die elektrische Anschlussvorrichtung 3 ist an einer einzigen Seite des Solarmoduls 2 angebracht, nämlich an der oberen Kante, die dem oberen Trägerprofil 6 zugewandt ist. Ein erster Teil 7 des oberen Trägerprofils 6 ist winklig ausgebildet und überragt bzw. überdeckt das Modul 2.

Die Rückwand 8 des so gelagerten Moduls 2 liegt an einer Dichtung 5 des oberen Trägerprofils 6 an. Von der Vorderseite 9 kann das Solarmodul 9 mit Hilfe einer gestuften Halterungsschiene 10, die separat ausgebildet ist, befestigt werden.

Zunächst wird aber das Solarmodul 2 gegen den Gegenhalter 11 am oberen Trägerprofil 6 gedrückt bzw. daran angelehnt. In diesem ersten Teil 7 des oberen Trägerprofils 6 ist eine Laufschiene 12 entlang des Trägerprofils 6 angeordnet, in der sich verschiebbare Nutensteine 13 befinden. Die Halterungsschiene 10 besitzt vorgebohrte Löcher 14 zum Einbringen von Schrauben 15, die in die Gewindebohrungen der Nutensteine 13 eingeschraubt werden können. Die Nutensteine 13 werden so positioniert, dass die Halterungsschiene 10 nicht mit dem elektrischen Anschluss 3 kollidiert.

Die Halterungsschiene 10 wiederum ist so gestuft ausgebildet, dass ein Teil 16 an der Vorderseite 9 des Solarmoduls 2 anliegt, ein Teil 17 das Solarmodul 2 überdacht und ein Abschnitt 18 mit den Bohrungen 14 zur Befestigung dient. Mit dem Anziehen der Schrauben 15 werden auch die Nutensteine 13 in der Laufschiene 12 fixiert. Von vorne bzw. an der Vorderseite 9 kann noch im Bereich des oberen Trägerprofils 6 eine Blende B, welche den elektrischen Anschluss 3 und die Halterungsschiene 10 überdeckt, angebracht werden. Die Blende B umfasst senkrecht zu ihrer Blendenfläche B0 drei etwa senkrecht dazu abstehende Laschen B2, B2, B3, welche zum oberen Trägerprofil 6 zeigen. Die Blende B wird in Richtung des Pfeils P aufgesteckt. B1 rastet dabei von schräg unten in die Dachabdeckung des ersten Teils 7 ein, B2 rastet in die Vertiefung C auf dem Teil 17 der Halterungsschiene 10 ein, während die Blende B mit der Lasche B3 unten zur Vorderseite 9 bzw. zum Teil 16 der Halterungsschiene 10 abschließt.

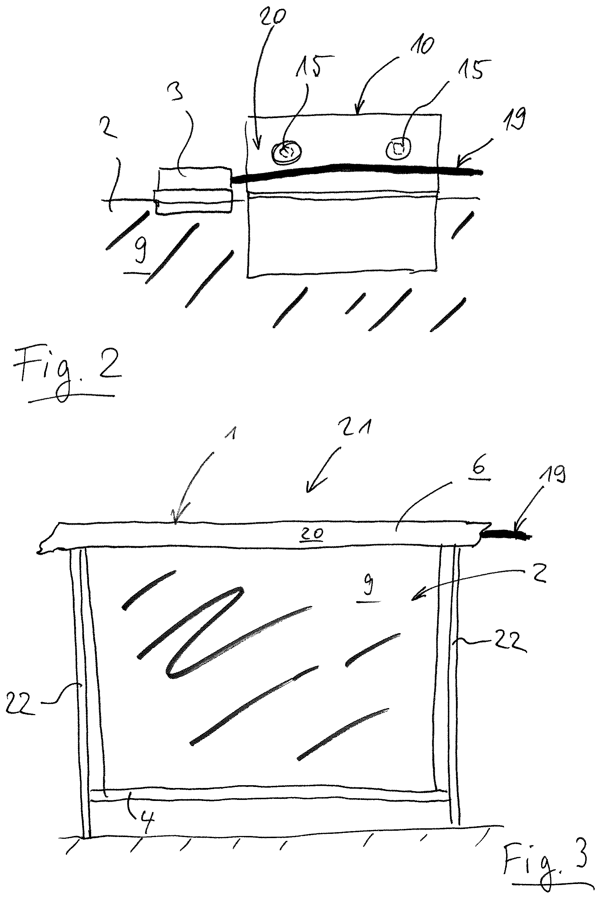

Figur 2 zeigt die fixierte Halterungsschiene 10, welche das Solarmodul 2 hält. Die Halterungsschiene 10 ist so angebracht, dass die Anschlussvorrichtung 3 sich daneben befindet und das von dieser Anschlussvorrichtung 3 ausgehende Kabel 19 über die Halterungsvorrichtung 10 gelegt werden kann, sodass dieser Bereich einen Kabelkanal 20 ausbildet.

Figur 3 zeigt eine Brüstung 21, die durch zwei Montagepfosten 22 gebildet wird, welche wiederum ein unteres Trägerprofil 4 und ein oberes Trägerprofil 6 halten. Unabhängig von den Montagepfosten 22 ist das Solarmodul 2 durch das untere und obere Trägerprofil 6, 7 gehalten. Das obere Trägerprofil 6 allein umfasst den Kabelkanal 20 zur Führung des Kabels 19. Die Montagepfosten 22 sind im Boden verankert. Im Übrigen ermöglicht der Kabelkanal 20 auch, dass zwei Kabel (Plus- und Minuspol) parallel durch den Kabelkanal 20 geführt werden uns so an derselben Stelle aus dem oberen Trägerprofil 6 herausragen können, d.h. die Weiterführung, etwa in eine Gebäudewand, muss nicht an zwei unterschiedlichen Stellen erfolgen.

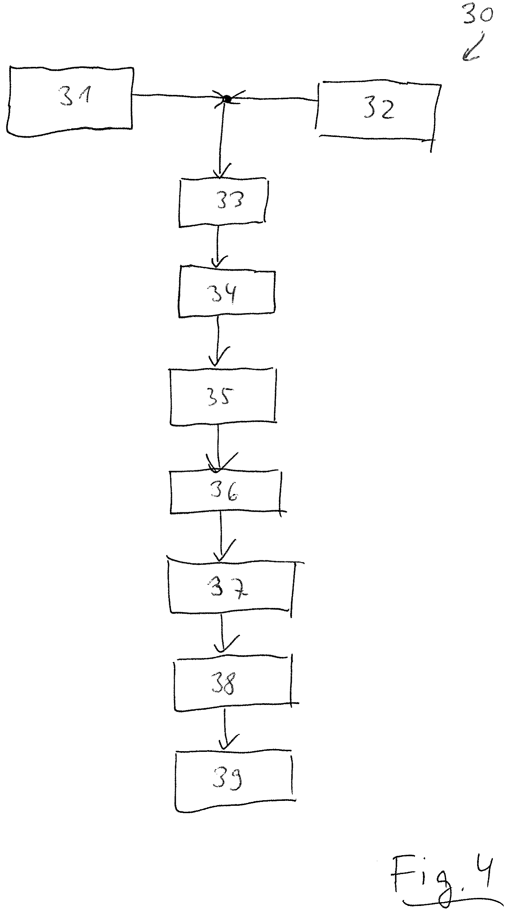

Figur 4 wiederum zeigt eine schematische Darstellung der einzelnen Schritte des Montageverfahrens 30, nämlich:
- Bereitstellen 31 des Solarmoduls 2
- Bereitstellen 32 der Befestigungsvorrichtung 1, d.h. falls nicht beriets geschehen: Verankerung der Montagepfosten 22 im Boden, Montage von unterem und oberem Trägerprofil 4, 6 an den Montagepfosten 22
- Einsetzen 33 des Solarmoduls 2 im U-förmigen unteren Trägerprofil 4
- Anlehnen 34 des Solarmoduls 2 an den Gegenhalter 11
- Positionieren 35 der Nutensteine 13
- Positionieren 36 der Halterungsschiene 10
- Befestigen 37 der Halterungsschiene 10 an den Nutensteinen 13
- Verlegen 38 bzw. Anschließen der Kabel 19 im Kabelkanal 20
- Einsetzen 39 der Blende B.

Allen Ausführungsformen und Weiterbildungen der Erfindung ist gemeinsam, dass zur verbesserten, vor allem vereinfachten Montage eine Befestigungsvorrichtung für Photovoltaik- und/oder Solarmodule mit einseitiger lateraler elektrischer Anschlussvorrichtung an einer Einfriedung, insbesondere an einer Brüstung oder einem Sichtschutz, oder an einer Fassade, bereitgestellt wird, welche umfasst:
a. ein unteres Trägerprofil zur haltenden Aufnahme des Moduls,
b. ein oberes Trägerprofil zur Halterung und kippsicheren Befestigung,
c. wobei oberes und unteres Trägerprofil durch wenigstens zwei vertikal angeordnete Montagepfosten miteinander verbunden sind,
d. wobei das untere Trägerprofil einen U-förmigen Querschnitt aufweist, dessen Öffnung in Richtung des oberen Trägerprofils zeigt, wobei sie sich dadurch auszeichnet, dass:
e. das obere Trägerprofil dazu ausgebildet ist, die Anschlussvorrichtung des Moduls zu umschließen,
f. wobei das obere Trägerprofil einen Kabelkanal umfasst, um die elektrische Kontaktierung der Anschlussvorrichtung herzustellen und wenigstens eine elektrische Leitung zur Anschlussvorrichtung zu führen.

Die Ausführungsformen der Erfindung können damit auch geschützter gegen Witterungseinflüsse sein. Sie lassen sich aber auch gut nachrüsten und erfordern, gerade hinsichtlich der Elektromontage eine deutlich vereinfachte Handhabung. Zudem kann ein Kabel ohne aufzufallen zum Gebäude hin an einer einzigen Stelle eingebracht werden.

### Bezugszeichenliste

- 1: Befestigungsvorrichtung
- 2: Solarmodul
- 3: Elektrische Anschlussvorrichtung
- 4: Unteres Trägerprofil
- 5: Dichtung
- 6: Oberes Trägerprofil
- 7: Erstes Teil des oberen Trägerprofils
- 8: Modul-Rückseite
- 9: Modul-Vorderseite
- 10: Halterungsschiene
- 11: Gegenhalter
- 12: Laufschiene
- 13: Nutensteine
- 14: Loch
- 15: Schraube
- 16: Abschnitt der Halterungsschiene
- 17: Abschnitt der Halterungsschiene
- 18: Abschnitt der Halterungsschiene
- 19: Kabel
- 20: Kabelkanal
- 21: Brüstung
- 22: Montagepfosten

- 30: Montageverfahren
- 31: Bereitstellen des Solarmoduls
- 32: Bereitstellen der Befestigungsvorrichtung
- 33: Einsetzen des Solarmoduls im U-förmigen unteren Trägerprofil
- 34: Anlehnen des Solarmoduls an den Gegenhalter
- 35: Positionieren der Nutensteine
- 36: Positionieren der Halterungsschiene
- 37: Befestigen der Halterungsschiene an den Nutensteinen
- 38: Verlegen bzw. Anschließen der Kabel im Kabelkanal
- 39: Einsetzen der Blende
- B: Blende
- B0: Blendenfläche
- B1: Lasche
- B2: Lasche
- B3: Lasche
- C: Vertiefung zum Einrasten
- P: Aufsteckrichtung

## Patentansprüche

1. Befestigungsvorrichtung (1) für Photovoltaik- und/oder Solarmodule (2) mit einseitiger lateraler elektrischer Anschlussvorrichtung (3) an einer Einfriedung (21), insbesondere an einer Brüstung oder einem Sichtschutz, oder an einer Fassade, umfassend:
a. ein unteres Trägerprofil (4) zur haltenden Aufnahme des Moduls (2),
b. ein oberes Trägerprofil (6) zur Halterung und kippsicheren Befestigung,
c. wobei das untere Trägerprofil (4) einen U-förmigen Querschnitt aufweist, dessen Öffnung in Richtung des oberen Trägerprofils (6) zeigt, **dadurch gekennzeichnet, dass**
d. das obere Trägerprofil (6) dazu ausgebildet ist, die Anschlussvorrichtung (3) des Moduls (2) zu umschließen,
e. wobei das obere Trägerprofil (6) einen Kabelkanal (20) ausbildet, um die elektrische Kontaktierung der Anschlussvorrichtung (3) herzustellen und wenigstens eine elektrische Leitung (19) zur Anschlussvorrichtung (3) zu führen.

2. Befestigungsvorrichtung (1) nach Anspruch 1, **dadurch gekennzeichnet, dass** oberes und unteres Trägerprofil (4, 6):
a. durch wenigstens einen, insbesondere zwei vertikal angeordnete(n) Montagepfosten (22) miteinander verbunden oder verbindbar sind, und/oder
b. gemeinsam auf einer oder zu beiden Seiten, insbesondere stirnseitig, mit einer Wand verbindbar sind.

3. Befestigungsvorrichtung (1) nach einem der vorangegangenen Ansprüche, **dadurch gekennzeichnet, dass** das obere Trägerprofil (6) eine Halterungsschiene (10) und einen Gegenhalter (11) aufweist, zwischen denen das Modul (2) gehalten werden kann, wobei die Halterungsschiene (10):
a. vom Gegenhalter (11) wegklappbar und/oder
b. separat und vollständig vom Gegenhalter (11) lösbar ausgebildet ist und wobei die Halterungsschiene (10) am Gegenhalter (11) anbringbar, insbesondere verschraubbar ist.

4. Befestigungsvorrichtung (1) nach einem der vorangegangenen Ansprüche, **dadurch gekennzeichnet, dass** das obere Trägerprofil (6) und/oder der Gegenhalter (11) eine Laufschiene (12) zur beweglichen Aufnahme von Nutensteinen (13) mit der Funktion einer Mutter für eine Schraubverbindung aufweist, welche so angeordnet ist, dass die Halterungsschiene (10) an den Nutensteinen (13) festschraubbar ist, um das Modul (2) zwischen Halterungsschiene (10) und Gegenhalter (11) zu befestigen.

5. Befestigungsvorrichtung (1) nach einem der vorangegangenen Ansprüche, **dadurch gekennzeichnet, dass** die Laufschiene (12) so angeordnet ist, dass sie parallel zur Kante des im unteren Trägerprofil (4) einsetzbaren oder eingesetzten Moduls (2) verläuft, an dem die Anschlussvorrichtung (3) angebracht ist.

6. Befestigungsvorrichtung (1) nach einem der vorangegangenen Ansprüche, **dadurch gekennzeichnet, dass** wenigstens ein Nutenstein (13) in der Laufschiene (12) angeordnet und so verschiebbar ist, dass dieser neben der lateralen elektrischen Anschlussvorrichtung (3) positionierbar ist, wobei die Halterungsschiene (10) insbesondere wenigstens eine Ausnehmung zur Durchführung der elektrischen Anschlussvorrichtung (3) in den Kabelkanal (20) aufweist.

7. Befestigungsvorrichtung (1) nach einem der vorangegangenen Ansprüche, **dadurch gekennzeichnet, dass** das obere Trägerprofil (6) eine Blende (B), insbesondere eine lösbare Blende, zur Abdeckung der Halterungsschiene (10) aufweist.

8. Befestigungsvorrichtung (1) nach einem der vorangegangenen Ansprüche, **dadurch gekennzeichnet, dass** der Kabelkanal (20)
- oberhalb des Solarmoduls (2) vorhanden ist und/oder
- aus der Halterungsschiene (10) und dem Photovoltaik- und/oder Solarmodul (2) als Hohlraum ausgebildet ist und/oder
- zwischen Blende (B) und Halterungsschiene (10) oder zwischen Halterungsschiene (19), dem oberen Trägerprofil (6) und dem Photovoltaik- und/oder Solarmodul (2) vorhanden ist.

9. Befestigungsvorrichtung (1) nach einem der vorangegangenen Ansprüche, **dadurch gekennzeichnet, dass** die Halterungsschiene (10) gestuft ausgebildet ist, um die Seite mit der Anschlussvorrichtung (3) wenigstens teilweise abzudecken und um im Bereich der Abstufung den Kabelkanal (20) auszubilden.

10. Befestigungsvorrichtung (1) nach einem der vorangegangenen Ansprüche, **dadurch gekennzeichnet, dass** die Halterungsschiene (10) und der Gegenhalter (11) eine Dichtung (5) zur Abdichtung und Lagerung gegenüber dem Modul (2) aufweisen.

11. Befestigungsvorrichtung (1) nach einem der vorangegangenen Ansprüche, **dadurch gekennzeichnet, dass** das untere Trägerprofil (4) eine Dichtung (5) zur Abdichtung und Lagerung gegenüber dem Modul (2) aufweist.

12. Einfriedung (21), insbesondere an einer Brüstung oder einem Sichtschutz, oder Fassade mit einem Photovoltaik- und/oder Solarmodul (2) und mit einer Befestigungsvorrichtung (1) nach einem der vorangegangenen Ansprüche.

13. Einfriedung (21) oder Fassade nach Anspruch 13, **dadurch gekennzeichnet, dass** das Photovoltaik- oder Solarmodul (2) mit der Seite, auf der sich die einseitige laterale Anschlussvorrichtung (3) befindet, am oberen Trägerprofil (6) und deren gegenüberliegende Seite am unteren Trägerprofil (4) befestigt ist.

14. Montageverfahren (30) zur Montage eines Photovoltaik- und/oder Solarmoduls (2) mit einseitiger lateraler elektrischer Anschlussvorrichtung (3) an einer Einfriedung (21), insbesondere an einer Brüstung oder einem Sichtschutz, oder an einer Fassade, **dadurch gekennzeichnet, dass**
a. ein Photovoltaik- und/oder Solarmodul (2) nach Anspruch 1 bereitgestellt wird (31),
b. eine Befestigungsvorrichtung (1) nach einem der Ansprüche 2 - 11 bereitgestellt wird (32),
c. das Photovoltaik- und/oder Solarmodul (2) in das untere Trägerprofil (4) mit der Seite, welche der Seite gegenüberliegt, auf der sich die einseitige laterale Anschlussvorrichtung (3) befindet, eingesetzt wird (33),
d. der wenigstens eine Nutenstein (13) so in der Laufschiene (12) verschoben wird, dass er nicht mit der Anschlussvorrichtung (3) überlappt (34),
e. das Photovoltaik- und/oder Solarmodul (2) gegen den Gegenhalter (11) gedrückt wird (35),
f. die Halterungsschiene (10) so positioniert wird (36), dass das Photovoltaik- und/oder Solarmodul (2) zwischen der Halterungsschiene (10) und dem Gegenhalter (11) gehalten wird,
g. die Halterungsschiene (10) mit Hilfe der Nutensteine (13) befestigt (37), insbesondere mit einer Schraubverbindung (15) befestigt wird, sodass sie das Photovoltaik- und/oder Solarmodul (2) gegen den Gegenhalter (11) drückt.

15. Montageverfahren (30) nach Anspruch 15, **dadurch gekennzeichnet, dass** die Halterungsschiene (10) und/oder die Anschlussvorrichtung (3) so positioniert wird/werden (38), dass die Anschlussvorrichtung (3) in den Kabelkanal (20) ragt, und anschließend wenigstens ein Kabel (19) mit der Anschlussverbindung verbunden und im Kabelkanal (20) geführt wird.

16. Montageverfahren (30) nach Anspruch 15 oder 16, **dadurch gekennzeichnet, dass** die Halterungsschiene (10) und/oder der Kabelkanal (20) durch eine Blende (B) abgedeckt wird / werden (39).
